# EUROPEAN PATENT SPECIFICATION

(11) **EP 3 874 953 B1**
(45) Date of publication and mention of the grant of the patent: **08.10.2025**
(21) Application number: 21160643.9
(22) Date of filing: 04.03.2021
(51) Int. Cl.: A01N 59/16, A01P 15/00, A01P 1/00

(54) **METHOD FOR CONTROLLING PATHOGENIC GROWTH IN MUSHROOM CULTURES**
VERFAHREN ZUR KONTROLLE VON PATHOGENEM WACHSTUM IN PILZKULTUREN
PROCÉDÉ DE CONTRÔLE DE CROISSANCE DE PATHOGÈNES DANS DES CULTURES DE CHAMPIGNONS

(30) Priority: 05.03.2020 BE 202005149; 05.03.2020 NL 2025057
(43) Date of publication of application: 08.09.2021
(73) Proprietor: Avecom NV, 9032 Wondelgem (BE); Karel Sterckx NV, 8800 Roselare (BE)
(72) Inventor: STRAGIER, Lutgart, 9032 Wondelgem (BE); VERSTRAETE, Willy, 9032 Wondelgem (BE); STERCKX, Bart, 8800 Roeselare (BE)
(74) Representative: Brantsandpatents bv

(56) References cited:
- EP-A1- 0 210 734
- WO-A2-2013/034939
- ABRAM A STEINER ET AL: "Recipe for Ferric Salts of Ethylenediaminetetraacetic Acid Received for publication July 15, 1969", PLANT PHYSIOL, 1 January 1970 (1970-01-01), pages 862 - 863, XP055737303, Retrieved from the Internet <URL:https://core.ac.uk/download/pdf/193827053.pdf>
- ANONYMOUS: "Ecological Soil Screening Level for Iron", OSWER DIRECTIVE 9285.7-69, 1 November 2003 (2003-11-01), pages 1 - 44, XP055819630, Retrieved from the Internet <URL:https://rais.ornl.gov/documents/eco-ssl_iron.pdf>

## Description

### TECHNICAL DOMAIN

This invention relates to a method and applications to control pathogenic growth in mushroom cultivations.

### BACKGROUND

Cultivated mushrooms, such as the Parisian champignon Agaricus bisporus, are susceptible to a broad range of pathogens. The bacterial pathogen Pseudomonas is the most significant species associated with culture decay with mushrooms. Various types of Pseudomonas are capable of causing blotch diseases with various degrees of discoloration. Pseudomonas tolaasii is the major cause of classic bacterial 'brown blotch' disease in cultured mushrooms. It leads to dark brown, often soggy and sunken lesions on mushroom buds and stems that render the crop unsuitable for sale. Apart from P. tolaasii, other Pseudomonas sp. are also harmful to mushroom cultivation.

Conventional ways of combating these pathogens, such as chemical pesticides, antibiotics or other methods are no longer suitable because of consumer expectations and also because of new regulations.

Alternative methods need to replace these traditional approaches.

WO 2013 034 939 describes the use of Pseudomonas synxantha PS54 to prevent infection with Pseudomonas strains (such as Pseudomonas tolaasii or Pseudomonas agarici) in cultivated mushrooms.

EP 0 210 734 covers the use of a bacterial competitor, namely P. fluorescens in order to keep the growth of P. tolaasii under control. KR 2004 0 078 027 also addresses the use of a bacterial competitor for P. tolaasii. KR '027 further describes P. putida on the one hand to stimulate the growth of the champignon and on the other hand, to reduce 'brown blotch' disease. The use of biological controls is one of the possible alternative methods. Such biological control requires knowledge and skills because the competing bacterial strain must be active when administered to the cultivation soil and must remain active in order to maintain its competitive place. The prevalence of this competitive bacterial strain and pathogenic bacteria should be determined regularly and be adjusted if necessary. Furthermore, environmental conditions should be ideal for the competitive bacterial strain. Biological controls also require additional monitoring and expenses.

US 2006 0 019 004 generally refers to methods of reducing a bacterial population and for slowing down decay and other unwanted quality changes in fresh products for human consumption; in particular in mushrooms. In this sense, the US '004 mentions the use of an initial microbial solution and a second microbial rinsing solution for mushroom crops to suppress discoloration of the mushrooms by bacterial infection or due to human actions. However, US '004 is not aimed at treating the mushrooms during mushroom cultivation, but only once they have been picked. Therefore, bacterial infections can arise during cultivation and infect the entire environment with substantial losses as a result.

Iron-based compositions for plant treatment have been previously described by Steiner et al. in 1969. Additionally, detailed data on soil iron content can be obtained from the document 'Ecological Soil Screening Level for Iron,' published by the U.S. Department of Energy, Oak Ridge National Laboratory. This document is accessible online at https://rais.ornl.gov/documents/eco-ssl iron.pdf.

The current invention aims to find a solution for at least some of the problems mentioned above.

### SUMMARY OF THE INVENTION

The invention involves a method as described in claim 1. In particular, the invention involves a method for controlling pathogenic bacterial growth of Pseudomonas sp. in cultivated mushroom crops.

The method used according to the current invention offers the advantage of treating the cultivation soil in a simple and efficient way without adverse effects. The grower does not require to have any specific prior knowledge or have made major investments in order to be able to apply this method.

The method is described in more detail in follow-up claims 2-11.

### DETAILED DESCRIPTION

The invention is a method of controlling pathogenic bacterial growth of Pseudomonas sp. in mushroom cultures. The invention also involves the practical use of a composition.

Unless otherwise defined, all of the terms used in the description of the invention, including the technical and scientific terms, reflect meanings as they are generally interpreted by specialists in the technical field of the invention. To enhance understanding of the description of the invention, the following terms are explained specifically.

"A" and "the" in this document refer to single as well as plural nouns unless the context clearly assumes otherwise. For example, "the" or "a" segment means one or more segments.

The terms "include", "including", "supplied with", "contain", "ranging", are synonyms and are inclusive or open terms that indicate the occurrence of what follows, and they do not exclude or block any other components, characteristics, elements, parts, steps, as known to, or described in the current state of the art.

Citations of numerical intervals by endpoints include all integers, fractions and/or real numbers between the endpoints, including these endpoints.

The term "pathogen" as used herein, refers to an organism, including a microorganism, that causes a disease in another organism, such as a plant or fungus, by directly infecting the other organism or by producing substances such as pathogenic toxins that cause disease in the other organism. As used here, the term pathogen is a harmful microbe capable of causing, either alone or in collaboration with another pathogen, a disease in fungi including but not limited to mushrooms, including but not limited to edible mushrooms, including but not limited to Agaricus bisporus. The word "pathogen" according to the current invention, refers to Pseudomonas sp.

The term "chelating agent" refers to a structure that binds at multiple points in a coordinate complex to a (metal) ion that is made soluble, preferably an iron ion.

The term "cultivation soil" according to current invention refers to the soil in which mushrooms are grown. This soil includes a substrate layer and a top layer, in which the substrate layer is a nutrient-rich layer and the top layer is nutrient-low.

The spawn of the mushrooms is placed in the substrate layer which is then covered by the top layer once the substrate has been proliferated by mycelium of the inoculated mushroom. The substrate layer consists of one or more fertilisers such as horse manure, donkey manure, or chicken manure mixed with straw, wood chips, coffee grains or equivalents. The top layer includes peat, beet pulp, and/or marl. The top layer also includes the microbial population that is essential to formation of the mushroom fruiting bodies.

Pathogenic bacteria are unwanted in mushroom cultures. Pathogenic bacteria can infect mushrooms and cause damage to the mushrooms which is detrimental to the crop. The infection results in disease symptoms that reduce the value of the mushrooms and even makes mushrooms in an advanced disease stage unsuitable for sale. Furthermore, the infection also results in a reduced yield because the formation of new fruiting bodies is impaired.

In the first aspect, the invention is a method of controlling pathogenic bacterial growth of Pseudomonas sp. in a mushroom culture, in which iron ions are administered to mushroom cultivation soil, with a concentration of between 0.050 kg iron ions per m3 and 5 kg of iron ions per m3 being administered to the said cultivation soil.

Providing iron ions to mushroom cultivation soil was surprisingly found to inhibit the growth of bacteria that are pathogenic to mushrooms. The administration of iron ions in cultivation is an easy process and does not require extraordinary measures. Without wanting to be exhaustive, a possible explanation for the effect of the added iron ions lies in providing a non-limited concentration of iron to non-pathogens present in the cultivation soil. This allows these non-pathogenic bacteria to gain a growth-advantage and to suppress the pathogenic population.

The iron ions to be used are commonly available, which reduces cost price, and they can be stored simply on site without losing activity.

In practical terms, the administered concentration of iron ions in cultivation soil is preferably at least 0.050 kg of iron ions per m3 after external administration of the iron ions according to the method.

The growth of pathogenic bacteria is inhibited when a minimum concentration of iron ions is added to the cultivation soil for mushrooms. The inventors have determined that this amount is the minimum amount for the control of pathogenic bacterial growth in a mushroom culture.

Preferably, the cultivation soil includes an administered concentration of iron ions of at least 0.055 kg of iron ions per m3, preferably at least 0.060 kg of iron ions per m3, at least 0.065 kg of iron ions per m3, at least 0.070 kg of iron ions per m3. These administered minimum amounts of iron ions result in improved control of pathogenic, bacterial growth in cultivation soil for mushrooms.

According to the first aspect, the cultivation soil preferably includes an administered concentration of iron ions of no more than 5 kg iron ions per m3 after external administration of iron ions according to the method. This concentration is the maximum concentration to control pathogenic bacterial growth in a mushroom culture. More than 5 kg of iron ions administered per m3 leads to adverse effects in mushroom cultures, including the occurrence of biological toxicity in the mushrooms, resulting in yield and/or quality reductions. This is also an excess use of iron ions, a waste of raw materials, as they can no longer be used optimally in the cultivation soil, and an unnecessary cost.

The concentration of applied iron ions in the cultivation soil is preferably at most 4.9 kg of iron ions per m3, more preferably no more than 4.8 kg iron ions per m3, no more than 4.7 kg iron ions per m3, maximum 4.6 kg iron ions per m3, maximum 4.5 kg iron ions per m3, maximum 4.4 kg iron ions per m3, maximum 4.3 kg iron ions per m3 , no more than 4.2 kg of iron ions per m3, no more than 4.1 kg of iron ions per m3, maximum 4 kg per maximum of m3, no more than 3.9 kg iron ions per m3, no more than 3.8 kg iron ions per m3, maximum 3.7 kg iron ions per m3, maximum 3.6 kg iron ions per m3, maximum 3.5 kg iron ions per m3 , no more than 3.4 kg of iron ions per m3, 3.3 kg of iron ions per m3, no more than 3.2 kg of iron ions per m3, no more than 3.1 kg of iron ions per m3, maximum 3 kg iron ions per m3, maximum 2.9 kg iron ions per m3, maximum 2.8 kg iron ions per m3, maximum 2.7 kg iron ions per m3, maximum 2.6 kg iron ions per m3, maximum 2.5 kg iron ions per m3, no more than 2.4 kg of iron ions per m3, no more than 2.3 kg of iron ions per m3, no more than 2.2 kg of iron ions per m3, no more than 2.1 kg of iron ions per m3. These maximum concentrations of added iron ions result in improved control of pathogenic bacterial growth in the cultivation soil for mushrooms.

Preferably, iron ions are added to the cultivation soil in such a way that the cultivation soil includes an added amount of iron ions ranging between the above preferences.

Preferably, iron ions are administered to mushroom cultivation soil at a concentration of between 0.050 kg iron ions per m3 and 4.9 kg iron ions per m3 being applied to the said cultivation soil.

More preferably, the concentration administered to the said cultivation soil is between 0.050 kg of iron ions per m3 and 4.8 kg of iron ions per m3, preferably ranging between 0.050 kg of iron ions per m3 and 4.7 kg iron ions per m3, more preferably ranging between 0.050 kg iron ions per m3 and 4.6 kg iron ions per m3, preferably ranging between 0.050 kg of iron ions per m3 and 4.5 kg of iron ions per m3, more preferably ranging between 0.055 kg of iron ions per m3 and 4.4 kg of iron ions per m3, preferably ranging between 0.055 kg of iron ions per m3 and 4.3 kg of iron ions per m3, preferably ranging between 0.055 kg iron ions per m3 and 4.2 kg iron ions per m3, more preferably ranging between 0.055 kg iron ions per m3 and 4.1 kg iron ions per m3, more preferably ranging between 0.055 kg iron ions per m3 and 4 kg iron ions per m3, preferably ranging between 0.055 kg of iron ions per m3 and 3.9 kg of iron ions per m3, preferably ranging between 0.060 kg iron ions per m3 and 3.8 kg iron ions per m3, more preferably ranging between 0.060 kg iron ions per m3 and 3.7 kg iron ions per m3, more preferably ranging between 0.060 kg iron ions per m3 and 3.6 kg iron ions per m3 , preferably ranging between 0.060 kg of iron ions per m3 and 3.5 kg of iron ions per m3, more preferably ranging between 0.060 kg iron ions per m3 and 3.4 kg of iron ions per m3, preferably ranging between 0.060 kg iron ions per m3 and 3.3 kg iron ions per m3, more preferably ranging between 0.065 kg iron ions per m3 and 3.2 kg iron ions per m3, more preferably ranging between 0.065 kg iron ions per m3 and 3.1 kg iron ions per m3 , preferably ranging between 0.065 kg of iron ions per m3 and 3.0 kg of iron ions per m3, more preferably ranging between 0.065 kg iron ions per m3 and 2.9 kg iron ions per m3, more preferably ranging between 0.065 kg iron ions per m3 and 2.8 kg iron ions per m3, more preferably ranging between 0.065 kg iron ions per m3 and 2.7 kg iron ions per m3, preferably ranging between 0.070 kg of iron ions per m3 and 2.6 kg of iron ions per m3, preferably ranging between 0.070 kg iron ions per m3 and 2.5 kg iron ions per m3, more preferably ranging between 0.070 kg iron ions 30 per m3 and 2.4 kg iron ions per m3, more preferably ranging between 0.070 kg iron ions per m3 and 2.3 kg iron ions per m3, preferably ranging between 0.070 kg of iron ions per m3 and 2.2 kg of iron ions per m3, more preferably ranging between 0.070 kg iron ions per m3 and 2.1 kg of iron ions per m3.

Administering such concentrations of iron ions to the cultivation soil results in control of pathogenic bacterial growth in mushroom cultivation soil.

Symptoms of the disease are recorded in a maximum of 50%, no more than 45%, no more than 40%, a maximum of 35%, a maximum of 30%, a maximum of 25%, up to 20% of the mushrooms. The method according to the current invention controls pathogenic bacterial growth and results in a quantitative and qualitative mushroom culture.

Iron content assessment in cultivation soil is a familiar process to the specialist. Iron ion concentration can be determined by chemical analytical assessment, spectrophotometric and titrimetric measurement, atomic absorption spectroscopic determination or other means. The iron content can be determined prior to administration of iron ions. Iron levels can also be determined after the iron ions are applied, confirming the increased concentration of iron ions in the cultivation soil.

According to one applied method, the invention involves a method of controlling pathogenic bacterial growth in mushroom cultures in which iron ions are administered to mushroom cultivation soil at a concentration of between 0.075 kg iron ions per m3, and 2 kg of iron ions per m3 being added to the said cultivation soil.

The cultivation soil preferably includes an added concentration of iron ions of at least 0.075 kg of iron ions per m3 and a maximum of 2 kg of iron ions per m3. This added concentration of iron ions results in better improved control of pathogenic bacterial growth in mushroom cultivation soil.

More preferably, the cultivation soil includes an added concentration of iron ions of at least 0.080 kg of iron ions per m3, even more preferably at least 0.085 kg of iron ions per m3, and at least 0.090 kg of iron ions per m3. More preferably, the cultivation soil includes an added concentration of iron ions of no more than 1.9 kg iron ions per m3, even more preferably 1.8 kg iron ions per m3, at most 1.7 kg iron ions per m3, and at most 1.6 kg iron ions per m3. This amount of iron ions results in even more improved control of pathogenic bacterial growth in mushroom cultivation soil.

Even more preferably, the concentration of iron ions administered to the said cultivation soil is between 0.075 kg of iron ions per m3 and 2 kg of iron ions per m3, with even more preference for between 0.075 kg iron ions per m3 and 1.95 kg iron ions per m3, ranging between 0.075 kg iron ions per m3 and 1.9 kg iron ions per m3 , ranging between 0.075 kg of iron ions per m3 and 1.85 kg of iron ions per m3, ranging between 0.080 kg iron ions per m3 and 1.8 kg of iron ions per m3, ranging between 0.080 kg of iron ions per m3 and 1.75 kg of iron ions per m3, ranging between 0.080 kg of iron ions per m3 and 1.7 kg iron ions per m3 , at between 0.080 kg of iron ions per m3 and 1.65 kg 8 iron ions per m3, between 0.085 kg of iron ions per m3 and 1.6 kg of iron ions per m3, ranging between 0.090 kg of iron ions per m3 and 1.55 kg of iron ions per m3.

Administering such concentrations of iron ions to the cultivation soil results in improved control of pathogenic bacterial growth in the mushroom cultivation soil. Symptoms of the disease are recorded in a maximum of 30%, no more than 25%, no more than 20%, a maximum of 15%, a maximum of 10%, a maximum of 8%, a maximum of 6%, a maximum of 4% and up to 2% of the mushrooms.

According to one preferred applied method, the invention involves an approach to controlling pathogenic bacterial growth in mushroom cultivation in which iron ions are administered to mushroom cultivation soil, where a concentration of between 0.095 kg of iron ions per m3 and 1.55 kg of iron ions per m3 is administered to the said cultivation soil.

More preferably, the cultivation soil includes an added concentration of iron ions of no more than 1.55 kg of iron ions per m3, even more preferably at most 1.5 kg iron ions per m3, a maximum of 1.45 kg iron ions per m3, a maximum of 1.4 kg iron ions per m3, a maximum of 1.35 kg iron ions per m3, a maximum of 1.3 kg iron ions per m3, and a maximum of 1.25 kg iron ions per m3.

With even more preference, the concentration of iron ions administered to the said cultivation soil is between 0.095 kg iron ions per m3 and 1.5 kg of iron ions per m3, ranging between 0.095 kg iron ions per m3 and 1.45 kg iron ions per m3, ranging between 0.095 kg iron ions per m3 and 1.4 kg iron ions per m3, ranging between 0.095 kg iron ions per m3 and 1.35 kg iron ions per m3 , ranging between 0.095 kg of iron ions per m3 and 1.3 kg of iron ions per m3, ranging between 0.095 kg of iron ions per m3 and 1.25 kg of iron ions per m3, ranging between 0.095 kg iron ions per m3 and 1.2 kg iron ions per m3, ranging between 0.10 kg iron ions per m3 and 1.2 kg iron ions per m3, ranging between 0.10 kg iron ions per m3 and 1.15 kg iron ions per m3.

A preferred applied method of controlling pathogenic bacterial growth in mushroom cultivation is one in which iron ions are administered to mushroom cultivation soil at a concentration of between 0.10 kg iron ions per m3 and 1.15 kg of iron ions per m3.

These added amounts of iron ions in the cultivation soil result in optimal control of pathogenic bacterial growth of Pseudomonas sp. in cultivation soil for mushrooms. Symptoms of the disease are recorded in a maximum of 5%, no more than 4%, no more than 3%, no more than 2%, or up to 1% of the mushrooms, or even in none of the mushrooms.

The checking of pathogenic bacterial growth in cultivation soil is a familiar process to the specialist. Samples of the cultivation soil can be microbiologically analysed by using methods such as selection media. However, this microbiological analysis does not identify the pathogen. In addition to the microbiological analyses mentioned above, cultivation soil samples can also be directly examined microscopically, with or without specific staining. Furthermore, pathogens can also be analysed by using molecular techniques such as polymerase chain reaction or sequence analysis. With the help of molecular techniques, the pathogens can also be identified. The presence or absence of a pathogen can also be scored by visual checks that check for symptoms expressed in the presence of a pathogen. This visual control is simple and effective and does not require intensive training. Mushrooms are counted within a given area, and the number of mushrooms showing symptoms of pathogenic bacterial infection is calculated. The mushrooms are visually checked and a score is allocated. The score varies from 0 to 5; 'score 0' is allocated when no disease is detectable and 'score 5' is used if more than 75% of the mushrooms being studied manifest signs of disease. For 'score 1', 'score 2', and 'score 3', 0 to 10%, 10 to 30% and 30 to 50% of the studied mushrooms show signs of disease respectively.

According to the method of the invention, the pathogenic bacteria are Pseudomonas sp. Pseudomonas sp. are common bacteria that exist in soil, water and air. Of these species, several are pathogenic to humans, animals, plants and fungi, such as the cultivated Agaricus bisporus mushrooms.

Characteristically, these pathogenic Pseudomonas sp. secrete pyoverdine in iron-limited conditions. Pyoverdine is a yellow-green, fluorescent siderophore. This siderophore has a high affinity for iron ions and binds to them selectively, after which they can be absorbed by Pseudomonas sp. in turn. The disease-causing Pseudomonas sp. thus have a competitive advantage over the other bacteria that are present in the cultivation soil. Once the nutrients present in the cultivation soil are no longer sufficiently available for the entire microbial community, a dysbiosis develops. Consequently, the disease-causing Pseudomonas sp. can dominate the microbial community and infect the culture with infected mushrooms as a result. This infection is associated with symptoms such as soggy and recessed lesions on mushroom buds and stems. Depending on the infecting Pseudomonas sp. the lesions have colors ranging from yellow, to orange, to brown, or green.

Mushrooms infected by Pseudomonas sp. are no longer suitable for consumption or sale, resulting in great losses. In addition, the cultivation soil involved is no longer suitable for starting a new mushroom crop and the entire area needs to be disinfected. Fresh, uninfected cultivation soil must be used, which entails additional costs.

According to one applied method, the pathogenic bacteria are Pseudomonas tolaasii.

P. tolaasii is a Gram-negative soil bacterium that causes a classic staining disease (called 'brown blotch') in mushroom cultivation. It causes dark brown lesions on the buds and stems of mushrooms, making the mushrooms unfit for sale. The dark brown lesions are caused by the presence of tolaasin; a toxin produced by P. tolaasii. P. tolaasii infection has already been reported in several edible mushrooms, including Agaricus bisporus, Agaricus bitorquis, Agaricus campestris, Pleurotus ostreatus, and Pleurotus eryngii.

According to one applied method, the pathogenic bacteria are Pseudomonas gingeri.

P. gingeri is a Gram-negative soil bacterium that causes a staining disease called 'ginger blotch' in cultivated mushrooms; it causes orange-brown lesions on the mushrooms. P. gingeri also contains genes that code for the secretion of proteins that give the species a competitive advantage over the other beneficial microorganisms in the cultivation soil and thus, they can dominate in the cultivation soil.

The macro and micronutrients present in cultivation soil are absorbed by microorganisms and used for growth and maintenance of the micro-organisms. According to the current invention, the cultivation soil is enriched with iron ions to control the growth of pathogenic bacteria. Thus, the microbial community in the cultivation soil retains its high diversity and is not dominated by one or more pathogenic bacteria that dominate in the cultivation soil and affect the mycelium network of the mushrooms as well as the fruiting bodies themselves.

The iron ions can be administered to the cultivation soil by mixing them into the cultivation soil in solid form. Preferably, the iron ions are evenly mixed into the cultivation soil. Iron ions can also be supplied in liquid form for easy application as a spray or dripped into the cultivation soil until it contains the desired amount of iron ions as mentioned above.

In one applied method, the current invention is a method of controlling pathogenic bacterial growth in a mushroom cultivation, by which the iron ions are administered in powdered form.

Pathogenic bacterial growth is efficiently controlled by the addition of the iron ions in powder form. The powder form can be mixed simply and evenly into cultivation soil. The powdered iron ions are absorbed into the cultivation soil. As a result, the mushroom cultivation has significantly fewer affected mushrooms. In addition, the powder form has the advantage of being easy to store in a dark and dry room.

According to one implementation of the current invention, the iron ions are derived from water iron.

Water iron or iron sludge is a residual substance released during groundwater treatment and in coagulation of surface water for the extraction of tap water. This water iron includes iron ions; in particular iron (hydr)oxides. Water iron is supplied in a liquid or solid form. For example, in a solid form the iron sludge is pelleted. Iron sludge is preferably used in a liquid form in the composition. The application of a residual substance in mushroom cultivation to control pathogenic bacterial growth contributes to the circular economy. Iron sludge is also available in large quantities which has cost benefits.

According to a preferred approach, the invention is a method of controlling pathogenic bacterial growth in a mushroom cultivation, in which the iron ions are administered as a liquid composition ranging from 1 to 8% m/v iron ions.

Preferably, the liquid composition includes at least 1% m/v iron ions, more preferably at least 1.5% m/v iron ions, at least 2% m/v iron ions, at least 2.5% m/v iron ions, at least 3% m/v iron ions, at least 3.5% m/v iron ions, at least 4% m/v iron ions, at least 4.5% m/v iron ions, at least 5% m/v iron ions, at least 5.5% m/v iron ions, at least 6% m/v iron ions, at least 6.5% m/v iron ions, at least 7% m/v iron ions, at least 7.5% m/v iron ions. The liquid form preferably contains a maximum of 8% m/v iron ions, at most 7.5% m/v iron ions, at most 7% m/v iron ions, at most 6.5% m/v iron ions. At most 6% m/v iron ions, at most 5.5% m/v iron ions, at most 5% m/v iron ions, at most 4.5% m/v iron ions, at most 4% m/v iron ions, at most 3.5 m/v iron ions, at most 3% m/v iron ions, at most 2.5% m/v iron ions, at most 2% m/v iron ions, at most 1.5% m/v iron ions.

Preferably, the liquid composition includes iron ions ranging between 2 and 8% m/v iron ions, ranging between 3 and 8% m/v, ranging between 4 and 8% m/v iron ions, ranging between 5 and 8% m/v, ranging between 6 and 8% m/v, and ranging between 7 and 8% m/v, more preferably ranging between 2 and 7% m/v, ranging between 2 and 6% m/v, ranging between 2 and 5% m/v, ranging between 2 and 4% m/v, and ranging between 2 and 3% m/v, ranging between 3 and 5% m/v, ranging between 4 and 5% m/v, and ranging between 3 and 4% m/v.

According to a preferred approach, the invention is a method of controlling pathogenic bacterial growth in a mushroom cultivation, in which iron ions are administered by means of a liquid composition with a dry matter content of iron ions ranging between 4 and 40%.

It has been established that the liquid solution containing the iron ions can be simply distributed into the cultivation soil according to the current invention. The iron ions are present in the solution in a dissolved form, making them biologically available to the microorganisms that are present in the soil. The concentration of the iron ions in this liquid composition achieves efficient absorption of the nutrients; the iron ions.

Preferably, the liquid composition includes a dry matter content of iron ions ranging between 4 and 39.6%, preferably between 4.2 and 39.2%, between 4.2 and 38.8%, between 4.4 and 38,4%, between 4.4 and 38%, between 4.6 and 37.6%, between 4.6 and 37.2%, between 4.8 and 36.8% between 4.8% and 36.4% between 5 and 36%, between 5 and 35.6%, between 5.2 and 35.2%, between 5.2 and 34.8%, between 5.4 and 34.4%, between 5.4 and 34%, between 5.6 and 33.6%, between 5.8 and 33.2%, between 6 and 32.8%, between 6.2 and 32.4%, and between 6.4% and 32%.

Measurement of dry matter content is done by using exactly defined chemical methods of analysis known to the specialist.

According to an applied method, the above composition also includes a chelating agent.

Non-limited examples of chelating agents are:
2-aminoethyl phosphonic acid (EPNA), dimethyl methyl phosphonate (DMMP), 1-hydroxyethythane 1, 1-diphosphonic acid (HEDP), tris(2-methylpyridyl)amine (TMPA), ethylene diamine tetra (methylene phosphonic acid) (EDTMP), tetramethylene diamino tetra (methylene phosphonic acid) (TDTMP), hexamethylene diamino tetra (methylene phosphonic acid) (HDTMP), diethylene triamine penta (methylene phosphonic acid) (DTPMP), ethylene diamine tetramic acid (EDTA), phosphonobutane tricarbonic acid (PBTC),
N-(phosphonomethyl) iminodiatic acid (PMIDA), 2-carboxy ethyl phosphoric acid (CEPA), 2-hydroxy phosphonic acid (HPCA), amino-tris (methylene phosphonic acid) (AMP), sodium tripolyphosphate (STPP), hydroxy ethyl ethylene diamine triamic acid (HEDTA), phosphonobutane 2-carboxy ethyl phosphonic acid (CEPA), 2-hydroxy phosphonic carbonic acid (HPCA), amino-tris (methylene phosphonic acid) (AMP), sodium tripolyphosphate (STPP), hydroxy ethyl ethylene diamine triamic acid (HEDTA), dihydroxy ethyl ethylene diamine diamic acid, diethylene triamine pentaacetic acid (DTPA), triethylenetetranitrilohexaacetic acid (TTHA), ethylene diamine dicharacterishydroxyphenyl acetic acid (EDDHA), ethylene diamine di-(2-hydroxy-5characterissulphophenylacetic) acid (EDDHSA), ethylene diamine dihydroxy-methylphenylatic acid (EDDHMA), ethylene diamine di-(5-carboxy-2-hydroxyphenyl) acid (EDDCHA), calciumdinatrium ethylene diamine-tetra-acetate (CaNa2EDTA), nitril-tri-acetic acid (NTA), propylene diamine-tetra-acetic acid (PDTA), polyflavonoids, sulphonates, dimercaptosuccinic acid (DMSA), fulvic and humic acid, lignosulfonic acid, gluconic acid, amino acids, polysaccharides, polyols, citric acid, tartaric acid, ascorbic acid, malic acid, fumaric acid, lactic acid or combinations thereof.

Chelating agents increase the biological availability of the iron ions. This simplifies the absorption of the iron ions by the microorganisms present in cultivation soil. This further preserves a diverse microbial community, preventing pathogens from gaining the upper hand.

According to a preferred approach, the chelating agent has a concentration of between 2 and 25% m/v in the stated composition.

The chelating agent concentration in liquid form promotes the solution of the iron ions. Consequently, the liquid composition is easy to store and should not be stirred before use in order to obtain a homogeneous composition.

Preferably, concentration ranges between 2 and 24% m/v in the stated composition, more preferably between 2 and 23% m/v in this composition, between 2 and 22% m/v in this composition, between 3 and 21% m/v in this composition, between 3 and 20% m/v in this composition, between 3 and 19% m/v, between 3 and 18% m/v in this composition, between 4 and 18% m/v in this composition, between 4 and 17% m/v in this composition, between 5 and 17% m/v in this composition, between 5 and 16% m/v in this composition, between 6 and 16% m/v in this composition, between 6 and 15% m/v in this composition, between 7 and 15% m/v in this composition, between 7 and 13% m/v in this composition, between 8% and 13% m/v in this composition, between 8 and 12% m/v in this composition, between 9 and 12% m/v in this composition, and ranges between 9 and 11% m/v in this composition. It has been established that a liquid composition with such a concentration of chelating agents shows little to no sediment during prolonged storage at varying temperatures. Furthermore, such concentrations ensure biological availability of the iron ions in the cultivation soil.

According to a preferred method, the chelating agent is a polyprotic acid, which includes at least one carbonic acid group and has at least one optional amine group. Preferably, the polyprotic acid includes at least one carbonic acid group and at least one amine group.

More preferably, the polyprotic acid includes at least two carbon acid groups and at least one amine group. More preferably, the polyprotic acid includes three carbon acid groups and one or more amine groups.

More preferably, the polyprotic acid includes at least three carbonic acid groups and at least one amine group. More preferably, the polyprotic acid includes four carbon acid groups and at least one amine group. More preferably, the polyprotic acid includes at least four carbon acid groups and two amine groups.

According to a more preferred method, the chelating agent is an aminopolycarbon acid. According to a preferred method, this is the chelating agent EDTA. Furthermore, EDTA can also be a salt-derived EDTA as a chelating agent. Non-limiting examples are calcium and sodium salts from EDTA, such as dinatrium EDTA, calcium-dinatrium EDTA, or tetra-sodium EDTA. According to another preferred approach, it is the chelating agent EDTS. EDTA, EDTS and their salt derivatives have antimicrobial activity and prevent enzymatic discoloration of the mushroom that is due to damage or deterioration.

According to one applied method, the said composition contains the chelating agent and the iron ions in a molar ratio ranging between 0.2:1 and 5:1 (chelator: iron).

More preferably, the stated composition includes the chelating agent and the iron ions in a molar ratio ranging between 0.21:1 and 4.9:1; even more preferably in a molar ratio ranging between 0.22:1 and 4.8:1; ranging between 0.23:1 and 4.7:1; ranging between 0.24:1 and 4.6:1; ranging between 0.25:1 and 4.5:1; ranging between 0.26:1 and 4.4:1; ranging between 0.27:1 and 4.3:1; ranging between 0.28 and 4.2:1; ranging between 0.29:1 and 4.1:1; ranging between 0.3:1 and 4:1; ranging between 0.31:1 and 3.9:1; ranging between 0.32 and 3.8:1; ranging between 0.33 and 3.7:1; understood between 0.34 and 3.6:1; between 0.35 and 3.5:1; ranging between 0.36 and 3.4:1; ranging between 0.37:1 and 3.3:1; ranging between 0.38:1 and 3.2:1; ranging between 0.39:1 and 3.1:1; ranging between 0.4:1 and 3:1; ranging between 0.41:1 and 2.9:1; ranging between 0.42:1 and 2.8:1; ranging between 0.43:1 and 2.7:1; ranging between 0.44:1 and 2.6:1; ranging between 0.45:1 and 2.5:1; ranging between 0.46:1 and 2.4:1; ranging between 0.47:1 and 2.3:1; ranging between 0.48:1 and 2.2:1; and ranging between 0.49:1 and 2.1:1.

The above molar ratio of chelating agent to iron ions achieves effective control of pathogenic bacterial growth. Visual symptoms of disease are reduced. The culture shows symptoms of infection and scores a maximum of 2. However, symptoms are limited, as only minor lesions are diagnosed and need to be monitored.

According to a preferred method, the stated composition includes the chelating agent and iron ions in a molar ratio ranging between 0.5:1 and 2:1 (chelator: iron).

More preferably, the stated composition includes the chelating agent and the iron ions in a molar ratio ranging between 0.52:1 and 1.95:1; more preferably ranging between 0.54:1 and 1.9:1; ranging between 0.56:1 and 1.85:1; ranging between 0.58:1 and 1.8:1; ranging between 0.6:1 and 1.75:1; ranging between 0.62 and 1.7:1; 0.64:1 and 1.65:1; ranging between 0.66:1 and 1.6:1; ranging between 0.68:1 and 1.55:1; ranging between 0.7 and 1.5:1; ranging between 0.72:1 and 1.45:1; ranging between 0.74:1 and 1.4:1; ranging between 0.76:1 and 1.35:1 and ranging between 0.78:1 and 1.3:1.

The above molar ratio of chelating agent to iron ions achieves better control of pathogenic bacterial growth. Symptoms of the disease are reduced further. The culture shows symptoms of infection, but has a maximum score of 1. Minimal symptoms are noted and the infection is controlled by removing the damaged mushrooms. Furthermore, at such molar ratios, biological diversity of the cultivation soil is effective.

Most preferably, the stated composition contains the chelating agent and iron ions in a molar ratio ranging between 0.8:1 en 1.25:1 (chelator: iron).

The above molar ratio of chelating agent and iron ions (as well as all of the ratios between them) achieve improved control of pathogenic bacterial growth. Symptoms of disease are only detected sporadically or are even absent; a score of 0 applies in this case. Furthermore, at such molar ratios, the biological diversity in cultivation soil is optimal.

According to one applied method according to the current invention, the composition is administered to cultivation soil so that the cultivation soil includes at least 1 litre per m3 and at most 25 litres per m3 of the stated composition.

It has been established that when the dosage of the stated composition in the cultivation soil ranges between 1 and 25 litres per m3, it controls the growth of pathogenic bacteria. At a dosage higher than 25 litres per m3, biological toxicity is detected in the mushrooms, which negatively affects the quality of the mushrooms and results in reduced yields. Also, higher doses of the liquid composition make the cultivation soil too damp which makes it more difficult for the mushrooms to form fruiting bodies.

Preferably, the said composition does not exceed 24.5 litres per m3, more preferably at most 24 litres per m3, a maximum of 23.5 litres per m3, no more than 23 litres per m3, no more than 22.5 litres per m3, no more than 22 litres per m3, no more than 21.5 litres per m3, no more than 21 litres per m3, no more than 20.5 litres per m3 , not more than 19.5 litres per m3, no more than 19 litres per m3, no more than 18.5 litres per m3, no more than 18 litres per m3, no more than 17.5 litres per m3, no more than 17 litres per m3, no more than 16.5 litres per m3, no more than 16 litres per m3, no more than 15.5 litres per m3, and no more than 15 litres per m3.

According to a preferred application of the method according to the current invention, the composition is administered to the cultivation soil, so that the cultivation soil contains at least 2 litres per m3 and at most 15 litres per m3 of the stated composition.

It has been found that a dose of the stated composition in cultivation soil ranging between 2 and 15 litres per m3 controls the growth of pathogenic bacteria without biologically toxic effects. Preferably, the stated composition should not exceed 14.5 litres per m3, no more than 14 litres per m3, no more than 13.5 litres per m3, no more than 13 litres per m3, no more than 12.5 litres per m3, no more than 12 litres per m3, no more than 11.5 litres per m3, no more than 11 litres per m3, no more than 10.5 litres per m3, and no more than 10 litres per m3. Preferably, the stated composition contains at least 1.5 litres per m3, more preferably the said composition has at least 2 litres per m3, at least 2.5 litres per m3, at least 3 litres per m3, at least 3.5 litres per m3 and at least 4 litres per m3.

According to a preferred implementation of the method according to the current invention, the composition is administered to the cultivation soil so that the cultivation soil includes at least 4 litres per m3 and at most 10 litres per m3 of the stated composition.

It has been established that dosing according to the current method controls pathogenic bacterial growth best. This dose is applied once and controls pathogenic bacterial growth throughout the full cycle of mushroom cultivation.

According to an applied method, the iron ions are administered to the mushroom cultivation soil once. Preferably, the iron ions are administered at the start of the mushroom cultivation process. Consequently, the growth of pathogenic bacteria is controlled because an original and stable microbial community is obtained and maintained.

According to an applied method according to the current invention, the mushroom cultivation soil includes a substrate layer and a top layer, and the iron ions are administered to the top layer. The iron ions are added to the top layer so that the administered concentration of iron ions in the top layer ranges between 0.050 kg of iron ions per m3 and 5 kg of iron ions per m3. Further application methods or preferences for the concentration of iron ions added to the top layer after external administration of the iron ions are listed above with respect to the cultivation soil and also apply to the top layer.

According to a further preferred application of the method according to the current invention, the composition is added to the top layer. The composition according to the current invention is administered to the top layer until the added concentration of iron ions in the top layer is between 0.050 kg of iron ions per m3 and 5 kg of iron ions per m3. Preferably, a quantity ranging between 1 litre per m3 and 25 litres per m3 of the composition is administered to the top layer according to current invention. Further application methods or preferences of the composition in the top layer are stated above with respect to the cultivation soil and they also apply to the top layer.

It has been shown that the administration of iron ions or the composition at the top layer, according to the current invention results in improved control of pathogenic bacterial growth. Enriching the top layer with iron ions by administering iron ions or by the composition according to this invention results in a microbial community with a diversity that further improves the stability of the microbial community, resulting in a quantitative and qualitative mushroom cultivation.

The iron content in the top layer can also be determined by the various measurement techniques mentioned above and known to the specialist.

According to a more preferred applied method of this invention, the iron ions or composition are administered to the top layer over a period ranging between 2 and 10 days to be stored and then to be applied to the substrate layer which contains the spawn of the mushrooms to be cultivated.

It has been established that the microbial community is in balance over a period of between 2 and 10 days and effectively controls pathogenic bacterial growth. Preferably this period ranges between 3 and 9 days, more preferably between 3 and 8 days, more preferably ranging between 4 and 8 days, more preferably ranges between 4 and 7 days, and more preferably between 5 and 7 days.

In a final dimension, the invention relates to the use of the composition as it involves controlling pathogenic bacterial growth in mushroom cultivation, preferably where Pseudomonas sp. are involved. Furthermore, the use of the composition and the cultivation soil of this invention is also for the preventive treatment of pathogenic bacterial growth in mushroom cultivation.

A specialist will appreciate that the composition can be implemented according to the current invention according to the application method of the current invention. Also, the cultivation soil, relating to the composition and according to the current invention can be implemented to control pathogenic bacterial growth. In addition, each characteristic described above and below can relate to each of the dimensions, even if the characteristic is described in connection to one particular aspect.

The last dimension concerns the use of the composition according to this invention, for the control of pathogenic bacterial growth of Pseudomonas sp. in mushroom cultivation.

According to a method of the current dimension, the pathogens are Pseudomonas sp.

The use of the composition according to this invention results in qualitative and quantitative mushroom growth. The growth of pathogenic bacteria is controlled. The administered iron ions create a heterogeneous microbial community in the mushroom cultivation soil, thereby inhibiting the overgrowth of pathogenic Pseudomonas sp., such as P. tolaasii, P. gingeri and other equivalents. The administered iron ions even restore the microbial community if it has been diseased by an overgrowth of pathogenic Pseudomonas sp.

The last dimension also concerns the use of the composition according to this invention as preventive treatment of pathogenic bacterial growth in the mushroom crop.

According to an applied method of the present dimension, the pathogens are Pseudomonas sp.

According to the current invention, pathogenic bacterial growth is controlled both preventively and therapeutically to ensure the success and yield of the mushroom crop.

In what follows below, the invention is described in terms of non-limiting examples that illustrate the invention; these are not intended or to be interpreted to limit the scope of the invention.

### EXAMPLES

### EXAMPLE 1:

A cultivation soil contaminated with Pseudomonas gingeri is treated by a composition to control the growth of P. gingeri and to prevent the symptoms of 'ginger blotch' disease in the mushrooms.

The experiment is conducted at ten randomised test plots per treatment, over an area of 1.5 m by 1 m.

The test plots are covered with a substrate layer, including an Agaricus bisporus mycelium network and a P. gingeri contaminated top layer. The said top layer is supplied with the composition containing a concentration of approximately 3% m/v of iron ions. The molar ratio of chelating agent to iron ions is 0.8:1 (chelator: iron), with 40% EDTA as chelating agent. Different dosages were added per plot; as recorded in Table 1.

The treatment 1 test plots are the control plots. The treated layers were left to rest for 7 days prior to having the composition added to the substrate layer. Once the top layer is placed on top of the substrate layer, symptoms are visually observed and scored for the next three days. The scores vary from 0 to 5, where 'score 0' is allocated if no disease is detectable and 'score 5' is allocated if more than 75% of the mushrooms being studied show disease symptoms.

In cases of a 'score 1', 'score 2', and 'score 3', 0 to 10%, 10 to 30% and 30 to 50% of the mushrooms being studied show disease symptoms respectively.

**Table 1: Overview of different doses and disease observations.**

| Analysis | Dose (litre per m³) | Day 1 | Day 2 | Day 3 |
|---|---|---|---|---|
| 1 | 0 | 3.1 | 4.1 | 4.1 |
| 2 | 5 | 1 | 2.2 | 1.9 |
| 3 | 10 | 1.4 | 2.8 | 2.5 |
| 4 | 20 | 1.9 | 2.7 | 2.8 |

Test plots to which dosages of more than 25 litres per m3 were administered, developed bare spots in at least 80% of the plots, indicating phytotoxicity of the composition at such doses. At dosages in excess of 20 litres per m3, such bare spots were also observed in the test plots; however, in reduced numbers. At doses less than 20 litres per m3, no signs of phytotoxicity were detected.

Similar observations were made for a molar ratio of chelating agent to iron ions of 1.25:1 (chelator: iron).

### EXAMPLE 2:

Example 2 examines the importance of resting time after treating the top layer. The same experimental design was used as in example 1. The top layer of each test plot is provided with 20 litres per m3 of the composition. After administration of the composition, the top layer is rested for 2, 4, 6, or 8 days before it is applied on top of the substrate layer. Pathogenic bacterial growth was visually observed and scored as explained in example 1. On the third day, the yields on test plots were also counted. The yields per test plot per analysis are shown in the last column of Table 2. The test plot is the same size as described in example 1.

**Table 2: Overview of different rest periods, disease observations and yields.**

| Analysis | Resting period | Day 1 | Day 2 | Day 3 | Yield |
|---|---|---|---|---|---|
| 1 | 2 | 1.2 | 1.6 | 1.8 | 25 |
| 2 | 4 | 1.1 | 1.5 | 1.7 | 32 |
| 3 | 6 | 1 | 2.2 | 1.9 | 68 |
| 4 | 8 | 1.9 | 2.7 | 2.8 | 73 |
| 5 | 10 | 1.7 | 2.5 | 2.4 | 71 |

The above analysis shows that a longer resting period does not result in improved control of pathogenic growth of P. gingeri.

The above analysis also shows that a longer resting period benefits the crop yield of mushrooms. A resting period longer than 8 days or 10 days is only associated with a minimally improved effect. Longer resting periods are therefore not indicated to achieve a higher yield. A resting period of between 5 and 7 days is beneficial to an increased yield.

### EXAMPLE 3:

Cultivation cells for Agaricus bisporus are provided with cultivation soil according to the current invention. The substrate layer containing A. bisporus spawn is covered with a top layer. The top layer is supplied with different amounts of iron ions and the growth of pathogenic bacteria is visually scored as described in example 1.

**Table 3: Overview of various quantities of iron ions in de top layer and disease observations.**

| Analysis | Min. quantity iron ions (kg per m³) | Max. quantity iron ions (kg per m³) | Day 1 | Day 2 | Day 3 |
|---|---|---|---|---|---|
| 1 | 5 | 8 | 4.1 | 4.3 | 4.9 |
| 2 | 5 | 7 | 3.1 | 3.5 | 3.3 |
| 3 | 5 | 6 | 2 | 2.9 | 3.2 |
| 4 | 0.050 | 5 | 1.9 | 2.7 | 2.8 |
| 5 | 0.050 | 4.7 | 1.9 | 2.5 | 2.4 |
| 6 | 0.055 | 4.2 | 1.8 | 2.6 | 2.4 |
| 7 | 0.055 | 3.9 | 1.9 | 2.7 | 2.2 |
| 8 | 0.06 | 3.6 | 1.7 | 2.4 | 2.2 |
| 9 | 0.060 | 3.3 | 1.7 | 2.5 | 2.3 |
| 10 | 0.065 | 2.9 | 1.5 | 1.9 | 2.1 |
| 11 | 0.070 | 2.4 | 1.6 | 1.9 | 2.0 |
| 12 | 0.075 | 2.0 | 1.4 | 1.8 | 1.7 |
| 13 | 0.080 | 1.80 | 1.3 | 1.5 | 1.4 |
| 14 | 0.085 | 1.60 | 1.2 | 1.3 | 1.2 |
| 15 | 0.090 | 1.55 | 1.0 | 0.8 | 1.1 |
| 16 | 0.095 | 1.55 | 0.6 | 0.9 | 1.0 |
| 17 | 0.100 | 1.50 | 0.6 | 0.8 | 0.9 |

According to the results shown in Table 3, it appears that a quantity higher than 5 kg per m3 in the top layer leads to a reduction in control of pathogenic bacterial growth. Too high a concentration of iron ions present in the top layer can lead to biological toxicity. Consequently, there is a disruption of the environment and pathogenic growth can take over the culture. Amounts of iron ions of between 0.050 and 5 kg per m3 in the top layer result in better control of pathogenic bacterial growth. A score below 3 was allocated to these analyses. At lower amounts of iron ions, ranging between 0.075 and 2 kg per m3, the score is even less than 2. Analysis 16 and 17 result in the best score, as they show little or no disease.

## Claims

1. A method for controlling pathogenic Pseudomonas sp. growth in mushroom cultivation, **characterised by** the fact that iron ions are added to mushroom cultivation soil; adding a concentration of between 0.050 kg of iron ions per m3 and 5 kg of iron ions per m3 to the stated cultivation soil.

2. The method according to claim 1, **characterised by** the fact that a concentration of between 0.075 kg of iron ions per m3 and 2 kg of iron ions per m3 is added to the stated cultivation soil.

3. The method according to one of the previous claims 1-2, **characterised by** the fact that the iron ions are applied as a powder.

4. The method according to one of the previous claims 1-2, **characterised by** the fact that the iron ions are applied as a liquid composition that contains 1 to 8% m/v of iron ions.

5. The method according to claim 4, **characterised by** the fact that the stated composition also contains a chelating agent, preferably in a concentration ranging between 2 and 25% m/v in the stated composition.

6. The method according to one of the previous claims 4-5, **characterised by** the fact that the stated composition contains the chelating agent and the iron ions at a molar ratio ranging between 0.2:1 and 5:1 (chelator: iron).

7. The method according to one of the previous claims 4-6, **characterised by** the fact that the chelating agent is a polyprotic acid that includes at least one carbonic acid group and one optional amine group.

8. The method according to one of the previous claims 4-7, **characterised by** the fact that the stated composition is added to the cultivation soil so that the cultivation soil contains at least 1 litre per m3 and at the most 25 litres per m3 of the stated composition.

9. The method according to one of the previous claims 1-8, **characterised by** the fact that the iron ions are derived from iron sludge.

10. The method according to one of the previous claims 1-9, **characterised by** the fact that the mushroom cultivation soil includes a substrate layer and a top layer, whereby the composition is applied to the top layer.

11. Use of a composition having an iron ion concentration of between 1 and 8% m/v iron ions, and preferably containing a chelating agent at a concentration of between 2 and 25% m/v. to control pathogenic Pseudomonas sp. growth in mushroom cultivations or for the preventive treatment of pathogenic Pseudomonas sp growth in mushroom cultivation.

## Patentansprüche

1. Ein Verfahren zur Kontrolle des Wachstums von pathogenen Pseudomonas sp. in der Pilzkultur, **dadurch gekennzeichnet, dass** Erde zum Kultivieren von Pilzen Eisenionen zugesetzt werden, wobei der angegebenen Kultivierungserde einer Konzentration zwischen 0,050 kg Eisenionen pro m³ und 5 kg Eisenionen pro m³ zugesetzt wird.

2. Das Verfahren nach Anspruch 1, **dadurch gekennzeichnet, dass** der angegebenen Kultivierungserde einer Konzentration zwischen 0,075 kg Eisenionen pro m³ und 2 kg Eisenionen pro m³ zugesetzt wird.

3. Das Verfahren nach einem der vorhergehenden Ansprüche 1-2, **dadurch gekennzeichnet, dass** die Eisenionen als ein Pulver angewandt werden.

4. Das Verfahren nach einem der vorhergehenden Ansprüche 1-2, **dadurch gekennzeichnet, dass** die Eisenionen als eine flüssige Zusammensetzung angewandt werden, die 1 bis 8 % m/V Eisenionen enthält.

5. Das Verfahren nach Anspruch 4, **dadurch gekennzeichnet, dass** die angegebene Zusammensetzung außerdem einen Chelatbildner enthält, vorzugsweise in einer Konzentration im Bereich zwischen 2 und 25 % m/V in der angegebenen Zusammensetzung.

6. Das Verfahren nach einem der vorhergehenden Ansprüche 4-5, **dadurch gekennzeichnet, dass** die angegebene Zusammensetzung den Chelatbildner und die Eisenionen in einem Molverhältnis im Bereich zwischen 0,2:1 und 5:1 (Chelator:Eisen) enthält.

7. Das Verfahren nach einem der vorhergehenden Ansprüche 4-6, **dadurch gekennzeichnet, dass** der Chelatbildner eine mehrprotonige Säure ist, die mindestens eine Kohlensäuregruppe und eine optionale Amingruppe beinhaltet.

8. Das Verfahren nach einem der vorhergehenden Ansprüche 4-7, **dadurch gekennzeichnet, dass** die angegebene Zusammensetzung der Kultivierungserde derart zugesetzt wird, dass die Kultivierungserde mindestens 1 Liter pro m³ und höchstens 25 Liter pro m³ der angegebenen Zusammensetzung enthält.

9. Das Verfahren nach einem der vorhergehenden Ansprüche 1-8, **dadurch gekennzeichnet, dass** die Eisenionen aus Eisenschlamm stammen.

10. Das Verfahren nach einem der vorhergehenden Ansprüche 1-9, **dadurch gekennzeichnet, dass** die Erde zum Kultivieren von Pilzen eine Substratschicht und eine obere Schicht beinhaltet, wobei die Zusammensetzung auf die obere Schicht angewandt wird.

11. Verwendung einer Zusammensetzung, die eine Eisenionenkonzentration zwischen 1 und 8 % m/V aufweist und vorzugsweise einen Chelatbildner in einer Konzentration zwischen 2 und 25 % m/V enthält, zur Kontrolle des Wachstums von pathogenen Pseudomonas sp. in Pilzkulturen oder für die präventive Behandlung des Wachstums von pathogenen Pseudomonas sp. in Pilzkulturen.

## Revendications

1. Un procédé destiné à lutter contre la croissance des Pseudomonas sp. pathogènes dans la culture de champignons, **caractérisé par le fait que** des ions de fer sont ajoutés dans le sol de culture de champignons ; l'ajout d'une concentration comprise entre 0,050 kg d'ions de fer par m3, et 5 kg d'ions de fer par m3 au sol de culture indiqué.

2. Procédé selon la revendication 1, **caractérisé par le fait qu'**une concentration comprise entre 0,075 kg d'ions de fer par m3 et 2 kg d'ions de fer par m3 est ajoutée au sol de culture indiqué.

3. Procédé selon l'une des revendications précédentes 1-2, **caractérisé par le fait que** les ions de fer sont appliqués sous forme de poudre.

4. Procédé selon l'une des revendications précédentes 1-2, **caractérisé par le fait que** les ions de fer sont appliqués sous la forme d'une composition liquide contenant de 1 à 8 % m/v d'ions de fer.

5. Procédé selon la revendication 4, **caractérisé par le fait que** la composition indiquée contient également un agent chélateur, de préférence à une concentration comprise entre 2 et 25 % m/v dans la composition indiquée.

6. Procédé selon l'une des revendications précédentes 4-5, **caractérisé par le fait que** la composition indiquée contient l'agent chélateur et les ions de fer dans un rapport molaire compris entre 0,2:1 et 5:1 (chélateur:fer).

7. Procédé selon l'une des revendications précédentes 4-6, **caractérisé par le fait que** l'agent chélateur est un acide polyprotique qui comporte au moins un groupe acide carbonique et un groupe amine facultatif.

8. Procédé selon l'une des revendications précédentes 47, **caractérisé par le fait que** la composition indiquée est ajoutée au sol de culture de manière à ce que le sol de culture contienne au moins 1 litre par m3 et au plus 25 litres par m3 de la composition indiquée.

9. Procédé selon l'une des revendications précédentes 1-8, **caractérisé par le fait que** les ions de fer sont dérivés de boues de fer.

10. Procédé selon l'une des revendications précédentes 1-9, **caractérisé par le fait que** le sol de culture de champignons comporte une couche de substrat et une couche supérieure, la composition étant appliquée à la couche supérieure.

11. Utilisation d'une composition ayant une concentration en ions de fer comprise entre 1 et 8 % m/v d'ions de fer, et contenant de préférence un agent chélateur à une concentration comprise entre 2 et 25 % m/v. pour lutter contre la croissance des Pseudomonas sp. pathogènes. dans les cultures de champignons ou pour le traitement préventif de la croissance des Pseudomonas sp pathogènes dans des cultures de champignons.
